# EUROPÄISCHE PATENTANMELDUNG

(11) **EP 4 439 691 A1**
(43) Veröffentlichungstag der Anmeldung: **02.10.2024**
(21) Anmeldenummer: 24164007.7
(22) Anmeldetag: 15.03.2024
(51) Int. Cl.: H01M 4/04, H01M 4/139, B05C 1/08, H01M 10/052

(54) **VERFAHREN ZUR HERSTELLUNG VON TROCKENEN ELEKTRODEN AUF EINEM STROMSAMMLER MITTELS EINER WALZENANLAGE, WALZENANLAGE, TROCKENE ELEKTRODE, COMPUTERPROGRAMMPRODUKT SOWIE COMPUTERLESBARES MEDIUM**

(30) Priorität: 30.03.2023 DE 102023202929
(71) Anmelder: VOLKSWAGEN AG, 38440 Wolfsburg (DE)
(72) Erfinder: Schopf, Sven, 38116 Braunschweig (DE); Bußwinkel, Ludger, 38106 Braunschweig (DE); Reuber, Sebastian, 01099 Dresden (DE); Schmidt-Lobach, Roland, 39356 Hörsingen (DE)

(57) **Zusammenfassung**

Es wird ein Verfahren zur Herstellung von trockenen Elektroden (10) auf einem Stromsammler (12) mittels einer Walzenanlage (100) vorgeschlagen. Die Walzenanlage (100) weist zumindest drei Walzen (13, 14, 15) und den Stromsammler (12) auf. Das Verfahren weist folgende Schritte auf:
• Rotieren einer ersten Walze (13) und der zweiten Walze (14) in entgegengesetzter Drehrichtung,
• Schütten von Pulver (11) in einen durch die erste rotierende Walze (13) und zweite rotierende Walze (14) gebildeten Kalanderspalt (20), wobei das Pulver (11) an der zweiten Walze (14) geführt wird,
• Auslösen eines Signals mittels einer Kontrolleinheit zum Einstellen eines Laminierspaltes (18) zwischen der zweiten Walze (14) und der dritten Walze (15), wobei die dritte Walze (15) und/oder die erste Walze (13) und die zweite Walze (14) hin zum Stromsammler (12) aufeinander bewegt werden,
• Rotieren zumindest der dritten Walze (15) in entgegengesetzter Richtung zur zweiten Walze (14), und
• Bewegen des Stromsammlers (12) durch den Laminierspalt (18).

Dabei wird der Laminierspalt (18) derart eingestellt, dass das Pulver (11) als dünne Schicht auf dem Stromsammler (12) zur Ausbildung der trockenen Elektroden (10) aufgebracht wird.

## Beschreibung

Die Erfindung betrifft allgemein das Gebiet der Elektrodenherstellung und insbesondere der trockenen Elektrodenherstellung. Im Speziellen betrifft die Erfindung ein Verfahren zur Herstellung von trockenen Elektroden auf einem Stromsammler mittels einer Walzenanlage, eine Walzenanlage, eine trockene Elektrode, ein Computerprogrammprodukt sowie ein computerlesbares Medium.

Beim Herstellen von trockenen Elektroden mit einem Mehrwalzenkalander, bzw. mit einer Walzenanlage, entsteht beim Anfahren des Prozesses ein Zustand, in dem sich unvollständige Schichten auf den Walzen befinden. Wenn diese unvollständigen Schichten auf den Stromsammler laminiert werden, wird eine Elektrode schlechter Qualität oder sogar eine unbenutzbare Elektrode hergestellt.

Weitergehen kann es passieren, dass die unvollständigen Schichten nicht vollständig auf den Stromsammler übertragen werden und daher Beschichtungsteile auf den Walzen verbleiben. Wenn das Material erneut dem Filmbildungsspalt zugeführt wird, kann dies die Walzenspalte verstopfen, sodass der Prozess angehalten werden muss und im schlimmsten Fall eine Beschädigung der Walzen eintritt.

Es ist Aufgabe der vorliegenden Erfindung, die voranstehend beschriebenen Nachteile zumindest teilweise zu beheben. Insbesondere ist es Aufgabe der vorliegenden Erfindung, die Effizienz sowie die Zuverlässigkeit eines Verfahrens zur Herstellung von trockenen Elektroden zu erhöhen und die Kosten beim Herstellen von trockenen Elektroden durch ein solches Verfahren zu senken. Weiter ist es Aufgabe der vorliegenden Erfindung, die Qualität von durch ein solches Verfahren hergestellten trockenen Elektroden zu erhöhen.

Die voranstehende Aufgabe wird gelöst durch ein Verfahren zur Herstellung von trockenen Elektroden auf einem Stromsammler mittels einer Walzenanlage mit den Merkmalen des Anspruchs 1, durch eine Walzenanlage mit den Merkmalen des Anspruchs 8, durch eine trockene Elektrode mit den Merkmalen des Anspruchs 10, durch ein Computerprogrammprodukt mit den Merkmalen des Anspruchs 11 sowie durch ein computerlesbares Medium mit den Merkmalen des Anspruchs 12. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Walzenanlage, der trockenen Elektrode, dem Computerprogrammprodukt und/oder dem computerlesbaren Medium und jeweils umgekehrt, sodass bezüglich der Offenbarung zu den einzelnen Erfindungsaspekten stets wechselseitig Bezug genommen wird bzw. werden kann.

Mit Ausführungsformen der Erfindung kann in vorteilhafter Weise ein verbessertes Verfahren zur Herstellung von trockenen Elektroden auf einem Stromsammler mittels einer Walzenanlage bereitgestellt werden. Mit einem solchen Verfahren kann kosteneffizient und zuverlässig trockene Elektroden höher Qualität hergestellt werden.

Ein Aspekt der vorliegenden Offenbarung betrifft ein Verfahren zur Herstellung von trockenen Elektroden auf einem Stromsammler mittels einer Walzenanlage. Die Walzenanlage weist zumindest drei Walzen und den zwischen einer zweiten Walze der zumindest drei Walzen und einer dritten Walze der zumindest drei Walzen angeordneten Stromsammler auf. Das Verfahren weist folgende Schritte auf:
- Rotieren einer ersten Walze der zumindest drei Walzen und der zweiten Walze in entgegengesetzter Drehrichtung,
- Schütten von Pulver in einen durch die erste rotierende Walze und zweite rotierende Walze gebildeten Kalanderspalt, wobei das Pulver an der zweiten Walze geführt wird,
- Auslösen eines Signals mittels einer Kontrolleinheit zum Einstellen eines Laminierspaltes zwischen der zweiten Walze und der dritten Walze, wobei die dritte Walze und/oder die erste Walze und die zweite Walze hin zum Stromsammler aufeinander bewegt werden,
- Rotieren zumindest der dritten Walze der zumindest drei Walzen in entgegengesetzter Richtung zur zweiten Walze, und
- Bewegen des Stromsammlers durch den Laminierspalt.
Der Laminierspalt wird dabei derart eingestellt, dass das Pulver als dünne Schicht auf dem Stromsammler zur Ausbildung der trockenen Elektroden aufgebracht wird.

Mit anderen Worten wird ein Verfahren zur Herstellung von trockenen Elektroden auf einem Stromsammler mittels einer Walzenanlage vorgeschlagen, welches vorsieht, die Walzenanlage vorerst anzulaufen bevor überhaupt das Pulver als dünne Schicht auf den Stromsammler aufgebracht wird. Es kann somit zwischen zwei Zuständen oder Betriebszuständen unterscheiden werden. Bevor das Signal zum Einstellen des Laminierspaltes ausgelöst wird, kann die Walzenanlage in einem anlaufenden Betrieb oder Zustand betrieben werden. Nachdem das Signal zum Einstellen des Laminierspaltes ausgelöst wurde, kann die Walzenanlage in einem angelaufenen Betrieb oder Zustand betrieben werden.

Bei dem Laminierspalt kann es sich um einen Spalt handeln, der zwischen zwei Walzen angeordnet ist und wodurch der Stromsammler angeordnet sein kann und vorzugsweise durchlaufen kann. Im Unterschied zum Laminierspalt handelt es sich bei dem Kalanderspalt um einen Abstand zwischen zwei Walzen, wodurch Pulver geschüttet werden kann. Zwischen dem Laminierspalt und dem Kalanderspalt befindet sich in der Regel nur eine Walze. Bei einem Nachverdichtungsprozess können zwei Walzen zwischen dem Laminierspalt und dem Kalanderspalt vorgesehen werden.

Bei dem Pulver kann es sich um ein pulverförmiges Material handeln. Das Pulver ist vorzugsweise lösungsmittelfrei und wird mittels der Walzenanlage in Schichten überführt. Das Pulver weist insbesondere ein Aktivmaterial, ein Leitadditiv und einen Binder auf. Die Komponenten des Pulvers können im Vorfeld des Verfahrens zur Herstellung von trockenen Elektroden gemischt werden. Die Elektrode kann als zweilagige oder einlagige Schicht aufgetragen auf einem Substrat bezeichnet werden. Bei der Elektrode kann es sich zum Beispiel um ein zweilagiges Kathodenmaterial und/oder um ein zweilagiges Anodenmaterial handeln.

Der Stromsammler kann als Stromkollektor oder als Substrat bezeichnet werden. Der Stromsammler kann als Hauptfunktion haben, als Substrat für die dünne Schicht zu dienen.

Die Qualität der hergestellten Elektroden kann von der Verteilung des Pulvers, bzw. des pulverförmigen Materials als dünne Schicht abhängen. Eine Elektrode hoher Qualität entsteht vorzugsweise aus einer gleichmäßigen dünnen Schicht. Deshalb kann es sich als vorteilhaft erweisen, das Pulver auf den Stromsammler erst aufzubringen, wenn das auf die zweite Walze geführte Pulver eine gleichmäßige dünne Schicht bildet.

Hierfür sieht das Verfahren vor, die Walzen, welche zusammen einen Kalanderspalt bilden, zu rotieren. In diesen Kalanderspalt wird vorzugsweise bereits Pulver geschüttet, welches an oder auf der zweiten Walze geführt wird. Das Pulver kann somit durch einen Kalanderprozess im Kalanderspalt zumindest teilweise eine dünne Schicht bilden. Allerdings bildet in der Regel das Pulver vorerst nur eine unvollständige dünne Schicht, bzw. eine Schicht, die Defekte aufweisen kann. Das teilweise zur dünnen Schicht gewordene Pulver kann Risse, Löcher oder dergleichen aufweisen. Eine solche unvollständige oder defekte Schicht ist daher für eine Elektrode nicht brauchbar oder würde lediglich zu einer Elektrode schlechter Qualität führen.

Das Verfahren sieht daher vor, den Laminierspalt erst dann einzustellen, wenn ein Signal mittels einer Kontrolleinheit ausgelöst wurde. Das Auslösen des Signals kann synonym eines Übergangs in einen angelaufenen Zustand sein. Das Signal wird vorzugsweise ausgelöst, wenn das Pulver nun eine gleichmäßige dünne Schicht auf der zweiten Walze bildet. Das Signal wird vorzugsweise dann ausgelöst, wenn die walzengetragene(n) Schicht(en) auf den Walzen vollständig vorhanden ist, bzw. sind.

Konkret kann die Kontrolleinheit das Signal auf einen Befehl eines Benutzers auslösen. Ein Benutzer der Walzenanlage kann das Pulver, bzw. die dünne Schicht betrachten und entsprechend entscheiden, dass nun der Laminierspalt eingestellt werden soll, und zwar derart, dass das Pulver als dünne Schicht auf den Stromsammler zur Ausbildung der trockenen Elektroden aufgebracht werden kann.

Alternativ oder zusätzlich kann die Kontrolleinheit basierend auf Erfahrungswerten nach einer vorgegebenen Anzahl an Drehungen der Walzen das Signal auslösen. Alternativ oder zusätzlich kann eine Entfernvorrichtung, welche zum Beispiel an der zweiten Walze angeordnet ist, ermitteln, wieviel Pulver von der entsprechenden Walze entfernt worden ist, sodass die Kontrolleinheit basierend auf die ermittelte Menge an entfernten Pulver das Signal auslösen kann.

Wenn das Signal zum Einstellen des Laminierspaltes ausgelöst worden ist, können die Walzen der Walzenanlage derart von der Kontrolleinheit gesteuert werden, dass der Laminierspalt sich um den Stromsammler verkleinert. Alle Walzen, die auf einer Seite des Stromsammlers angeordnet sind, können synchron hin zum Stromsammler in radialer Richtung bewegt werden. Alternativ können sowohl die Walzen auf der einen Seite des Stromsammlers als auch die Walzen auf der anderen Seite des Stromsammlers hin zum Stromsammler radial bewegt werden. Wird auf beide Seiten das Pulver als dünne Schicht auf den Stromsammler aufgebracht, so kann es sich als vorteilhaft erweisen, die Walzen von beiden Seiten des Stromsammlers hin zum Stromsammler zu bewegen. Beim Einstellen des Laminierspaltes kann der Abstand zwischen zwei benachbarten Walzen, welche um den Stromsammler angeordnet sind, eingestellt werden und insbesondere verkleinert werden. Es sei bemerkt, dass der Laminierspalt beim Betreiben der Walzenanlage nicht konstant sein muss.

Die Breite des Laminierspaltes kann von der Kontrolleinheit weiterhin im angelaufenen Zustand eingestellt werden. Die Einstellung des Laminierspaltes kann kraftgesteuert oder weggesteuert sein.

Der Laminierspalt kann beim Aufbringen des Pulvers als dünne Schicht variieren. Der Laminierspalt kann insofern variieren, dass selbst beim Variieren das Pulver als dünne Schicht weiterhin aufbringbar ist. Eine kraftgesteuerte Einstellung des Laminierspaltes berücksichtigt die Kraft oder den Druck, die auf den Stromsammler beim Aufbringen des Pulvers als dünne Schicht aufgebracht wird. Erhöht sich die Kraft und/oder der Druck auf den Stromsammler wird der Laminierspalt breiter eingestellt. Dies bedeutet jedoch, dass die dünne Schicht ebenfalls dicker wird. Bei einer kraftgesteuerten Einstellung des Laminierspaltes kann es vorgesehen werden, die somit hergestellten Elektroden nachzuarbeiten, um die Dicke der Elektroden anzupassen.

Bei einer weggesteuerten Einstellung des Laminierspaltes wird der tatsächliche Abstand zwischen Stromsammler und benachbarter Walze oder zwischen den zwei benachbarten Walzen um den Stromsammler eingestellt. Bei einer weggesteuerten Einstellung des Laminierspaltes kann der Laminierspalt im gesamten angelaufenen Betrieb oder Zustand konstant sein.

Sobald die übrigen Walzen der Walzenanlage rotiert werden, kann der Laminierspalt eingestellt werden und zwar derart, dass nun das Pulver als dünne Schicht auf den Stromsammler aufbringbar ist. Alternativ können sich die übrigen Walzen der Walzenanlage gleichzeitig zum Stromsammler in Bewegung setzen. Maßgeblich kann jedoch sein, dass die übrigen Walzen erst rotieren oder zumindest frei rotierbar sind, bevor der Laminierspalt zusammengefahren wird, da es ansonsten zu einem Bahnriss kommen kann. Bei einer Ausführungsform, in welcher die dünne Schicht lediglich auf einer Seite des Stromsammlers aufgebracht wird, wird die dritte Walze nun in Rotation gebracht. Bei einer um den Stromsammler symmetrischen Ausführungsform einer Walzenanlage, kann es denkbar sein, dass schon bevor der Laminierspalt eingestellt wird, alle Walzen der Walzenanlage rotieren. Maßgeblich kann es sein, dass alle Walzen, die einer Schüttvorrichtung benachbart sind, bereits vor dem Einstellen des Laminierspaltes rotiert werden.

Unmittelbar nach dem Einstellen, bzw. dem Auslösen des Signals zum Einstellen des Laminierspaltes kann der Stromsammler bewegt werden, bzw. durch die zweite und die dritte Walze durchlaufen. In der ganzen Zeit, in welcher der Laminierspalt zu breit ist, um Pulver auf den Stromsammler überhaupt aufbringen zu können, können der Stromsammler und die Stromsammlerfolie statisch sein. Dadurch kann Energie gespart werden.

Es sei bemerkt, dass wenn die Walzenanlage um den Stromsammler symmetrisch ausgebildet ist, eine zweiseitige trockene Elektrode hergestellt werden kann. Dadurch kann in zwei Kalandierspalten Pulver geschüttet werden und entsprechend zwei Schichten an jeweils der dem Stromsammler benachbarten Walzen geführt werden.

Durch das Verfahren können in effizienter und präziser Weise Elektroden hoher Qualität bereitgestellt werden. Durch ein solches Verfahren kann ebenfalls das Verstopfen der Walzenanlage vermieden oder zumindest reduziert werden. Durch ein solches Verfahren kann der Wartungsaufwand einer Walzenanlage zur Herstellung von trockenen Elektroden reduziert werden.

Gemäß einer Ausführungsform des Verfahrens weist das Verfahren weiter zumindest einen der folgenden Schritte auf:
- Ermitteln der Dicke an der zweiten Walze des zu einer dünnen Schicht gewordenen Pulvers, und
- Auslösen des Signals mittels der Kontrolleinheit basierend auf der ermittelten Dicke.

Um zu vermeiden, dass das Pulver als unvollständige dünne Schicht auf den Stromsammler aufgebracht wird, kann es vorgesehen werden, dass die Dicke des zu einer dünnen Schicht gewordenen Pulvers an der zweiten, alternativ zusätzlich an der dritten Walze, ermittelt wird. Dies kann mittels eines Schichtdickensensor durchgeführt werden. Alternativ oder zusätzlich kann eine Kamera die zweite, alternativ auch die dritte Walze, filmen und die Aufnahme auf einer Benutzerschnittstelle wiedergeben. Ein Benutzer kann basierend auf den Aufnahmen der zweiten und/oder der dritten Walze ermitteln, ob die Dicke des zu einer dünnen Schicht gewordenen Pulvers ein vorgegebenes Kriterium, wie etwa eine vorgegebene Dicke, erfüllt. Alternativ oder zusätzlich kann ein auf künstliche Intelligenz basiertes Programm über die von einer Kamera aufgenommenen Aufnahmen laufen.

Es sei bemerkt, dass die Schicht nicht nur eine vorgegebene Dicke aufweisen soll, sondern über einen vorgegebenen Abschnitt eine - zumindest vorwiegend - konstante Dicke aufweisen soll. Mit anderen Worten kann ein Signal mittels der Kontrolleinheit ausgelöst werden, wenn die ermittelte Dicke ein vorgegebenes Kriterium erfüllt. Beim vorgegebenen Kriterium kann es sich um eine Flächenbeladung, einen minimale defektfreie Fläche oder dergleichen handeln.

Dadurch kann der Zeitpunkt des Auslösens des Signals präziser eingestellt werden, wodurch die Qualität der hergestellten Elektrode weiter erhöht werden kann.

Gemäß einer Ausführungsform des Verfahrens weist das Verfahren weiter folgenden Schritt auf:
Entfernen des an der zweiten Walze geführten Pulvers, insbesondere des zu einer defekten dünnen Schicht gewordenen Pulvers, durch eine Entfernvorrichtung, die in Drehrichtung nach dem Laminierspalt angeordnet ist. Beim entfernten an der zweiten Walze geführten Pulver kann es sich um eine auf der zweiten Walze befindliche defekte Schicht handeln, d. h., z. B. um eine Schicht mit falscher Dicke oder unregelmäßiger Dicke. Das Entfernen des an der zweiten Walze geführten Pulvers, das vorzugsweise zumindest teilweise zu einer defekten Schicht geworden ist, kann während des Anlaufbetriebs durchgeführt werden.

Dadurch kann das Material, bzw. das Pulver, was nicht auf den Stromsammler aufgebracht wird, sei es in einem anlaufenden oder in einem angelaufenen Betrieb der Walzenanlage, an der entsprechenden Walze entfernt werden. Dies minimiert das Risiko einer Verstopfung an der entsprechenden Walze der Walzenanlage.

Das Pulver oder das Material, welches von der Entfernvorrichtung entfernt worden ist, kann einer Schüttvorrichtung wieder zugeführt werden. Das Pulver kann somit wiederverwendet werden und der Pulververbrauch bei der Herstellung von Elektroden kann reduziert werden. Bevor das entfernte Pulver wieder geführt werden kann, kann es sich als vorteilhaft erweisen, das entfernte Pulver in einem vorangegangenen Prozessschritt aufzubereiten.

Gemäß einer Ausführungsform des Verfahrens wird die Drehgeschwindigkeit der ersten Walze, der zweiten Walze, der dritten Walze und/oder der Durchlaufgeschwindigkeit des Stromsammlers mittels der Kontrolleinheit, vorzugsweise basierend auf der ermittelten Dicke des zu einer dünnen Schicht gewordenen Pulvers, gesteuert.

Mit anderen Worten kann die Walzenanlage und insbesondere die Walzen der Walzenanlage derart gesteuert werden, dass ein vorgegebenes Kriterium, wie etwa einer Flächenbeladung des zu einer dünnen Schicht gewordenen Pulvers, einer Dicke der dünnen Schicht oder dergleichen, erfüllt werden kann. Die Dicke des zur dünnen Schicht gewordenen Pulvers kann von der Drehgeschwindigkeit der Walzen der Walzenanlage abhängen und vice versa.

Dadurch können Elektroden höherer Qualität hergestellt werden.

Gemäß einer Ausführungsform des Verfahrens wird beim Entfernen des an der zweiten Walze geführten Pulvers, insbesondere des zu einer defekten dünnen Schicht gewordenen Pulvers, das Pulver von der Entfernvorrichtung aufgefangen und/oder abgesaugt.

Gemäß einer Ausführungsform des Verfahrens wird das Signal zum Einstellen eines Laminierspaltes zwischen der zweiten Walze und der dritten Walze nach einer vordefinierten Zeit ausgelöst.

Die Walzenanlage kann beispielsweise einen virtuellen Zwilling aufweisen. Basierend auf Simulationen oder Versuchen mit dem virtuellen Zwilling der Walzenanlage kann bekannt sein, dass nach einer vordefinierten Zeit die Dicke, die Flächenbeladung und/oder weitere Parameter des zu einer dünnen Schicht gewordenen Pulvers ein vorgegebenes Kriterium erfüllen. Eine solche vordefinierte Zeit kann zum Beispiel in einem Speichermedium der Kontrolleinheit hinterlegt sein. Das Signal zum Einstellen des Laminierspaltes kann demnach nach der vordefinierten Zeit automatisch ausgelöst werden.

Die vordefinierte Zeit kann ebenfalls auf empirischen Daten und/oder Erfahrungsdaten basieren. Die vordefinierte Zeit kann daher von einem Benutzer in einem Speichermedium der Kontrolleinheit etwa mittels einer Benutzerschnittstelle hinterlegt werden.

Es kann zudem vorgesehen werden, dass die vordefinierte Zeit eine maximale Zeit definiert. Mit anderen Worten kann das Signal nach einer maximalen Zeit, beispielsweise unabhängig einer ermittelten Dicke, ausgelöst werden. Dies kann sich zum Beispiel vorteilhaft erweisen, wenn die Kontrolleinheit zum Beispiel dazu eingerichtet ist, erst auf einem Befehl eines Benutzers das Signal auszulösen. Vergisst der Benutzer das Befehl auszugeben, so kann vermieden werden, dass die Walzenanlage unnötig lang im anlaufenden Betrieb oder Zustand läuft.

Es kann sich ebenfalls als vorteilhaft erweisen, das Signal nach einer vordefinierten Zeit auszulösen, wenn zum Beispiel der Schichtdickensensor fehlerhaft funktioniert und somit nicht zuverlässig basierend auf einer ermittelten Dicke das Signal ausgelöst werden kann.

Gemäß einer Ausführungsform des Verfahrens weist das Verfahren weiter zumindest einen der folgenden Schritte auf:
- Ermitteln einer Pulvermenge, die in den Kalanderspalt geschüttet worden ist, und/oder
- Ermitteln einer erfolgten Drehung der zweiten Walze,
- Auslösen des Signals mittels der Kontrolleinheit basierend auf der ermittelten Pulvermenge und/oder der ermittelten erfolgten Drehung der zweiten Walze.

Um ermitteln zu können, welche Pulvermenge in den Kalanderspalt geschüttet worden ist, kann es vorgesehen werden, die aus einer Dosiereinheit entnommene Pulvermenge zu ermitteln.

Es sei bemerkt, dass beim Anhalten der Walzenanlage genau anders herum vorgegangen werden kann, um keine nicht brauchbare Beschichtung auf den Stromsammler zu übertragen. Mit anderen Worten kann vorgesehen werden, beim Anhalten der Walzenanlage den Laminierspalt vorerst derart einzustellen, dass das Pulver nicht als dünne Schicht auf den Stromsammler aufbringbar ist. Erst nach dem entsprechenden Einstellen des Laminierspaltes, d. h., nach dem Vergrößern des Laminierspaltes, können die entsprechenden Walzen angehalten werden.

Ein zweiter Aspekt der vorliegenden Offenbarung betrifft eine Walzenanlage zur Herstellung von trockenen Elektroden auf einen Stromsammler. Die Walzenanlage weist eine Kontrolleinheit, zumindest drei Walzen, einen in einem Laminierspalt angeordneten Stromsammler, welcher dazu ausgebildet ist, zu einer dünnen Schicht gewordenes Pulver aufzufangen, auf. Der Laminierspalt definiert dabei den Abstand zwischen einer ersten Walze der zumindest drei Walzen und einer zweiten Walze der zumindest drei Walzen. Die Walzenanlage weist weiter eine Schüttvorrichtung, welche dazu ausgebildet ist, Pulver in den Kalanderspalt zu schütten, auf. Der Kalanderspalt definiert dabei den Abstand zwischen einer ersten Walze und der zweiten Walze. Die Walzenanlage weist weiter eine Entfernvorrichtung, welche dazu eingerichtet ist, das an der zweiten Walze geführte Pulver zu entfernen, auf. Die Entfernvorrichtung ist in Drehrichtung nach dem Laminierspalt angeordnet. Die Kontrolleinheit ist dabei zum Auslösen eines Signals zum Einstellen eines Laminierspaltes, insbesondere die Dicke des Laminierspaltes, eingerichtet.

Die Vorteile, welche in Bezug auf das Verfahren voranstehend und nachfolgend erläutert sind, gelten gleichermaßen für die Walzenanlage.

Gemäß einer Ausführungsform der Walzenanlage, weist die Walzenanlage weiter einen Schichtdickensensor auf, welcher dazu eingerichtet ist, die Dicke des zu einer dünnen Schicht gewordenen Pulvers an der zweiten Walze, insbesondere in Drehrichtung vor dem Laminierspalt, zu ermitteln.

Ein dritter Aspekt der vorliegenden Offenbarung betrifft eine trockene Elektrode, welche mittels eines Verfahrens, wie voranstehend und nachfolgend beschrieben, hergestellt ist.

Ein vierter Aspekt der vorliegenden Offenbarung betrifft ein Computerprogrammprodukt, umfassend Befehle, die bei einer Ausführung die Kontrolleinheit der Walzenanlage, wie voranstehend und nachfolgend beschrieben, veranlassen, zumindest Teilschritte des Verfahrens, wie voranstehend und nachfolgend beschrieben, auszuführen.

Ein vierter Aspekt der vorliegenden Offenbarung betrifft ein computerlesbares Medium, auf dem das Computerprogrammprodukt, wie voranstehend beschrieben, gespeichert ist.

Sämtliche Offenbarungen und Vorteile, welche voranstehend und nachfolgend in Bezug auf einen Aspekt der vorliegenden Offenbarung beschrieben sind, gelten gleichermaßen für alle weiteren Aspekte der vorliegenden Offenbarung.

Im Folgenden werden Ausführungsbeispiele der Erfindung unter Bezugnahme auf die Figuren beschrieben.
- Figur 1: zeigt schematisch eine Seitenansicht einer Walzenanlage gemäß einem Ausführungsbeispiel,
- Figur 2: zeigt schematisch eine Draufsicht einer Walzenanlage gemäß einem Ausführungsbeispiel,
- Figur 3: zeigt schematisch eine Seitenansicht einer Walzenanlage gemäß einem weiteren Ausführungsbeispiel,
- Figur 4: zeigt schematisch eine Seitenansicht einer Walzenanlage gemäß einem weiteren Ausführungsbeispiel,
- Figuren 5 und 6: zeigen schematisch eine Walze einer Walzenanlage gemäß einem Ausführungsbeispiel, und
- Figuren 7 bis 9: zeigen schematisch Seitenansichten von Walzenanlagen gemäß weiteren Ausführungsbeispiele.
Ähnliche, ähnlich wirkende, gleiche oder gleich wirkende Elemente sind in den Figuren mit ähnlichen oder gleichen Bezugszeichen versehen. Die Figuren sind lediglich schematisch und nicht maßstabsgetreu.

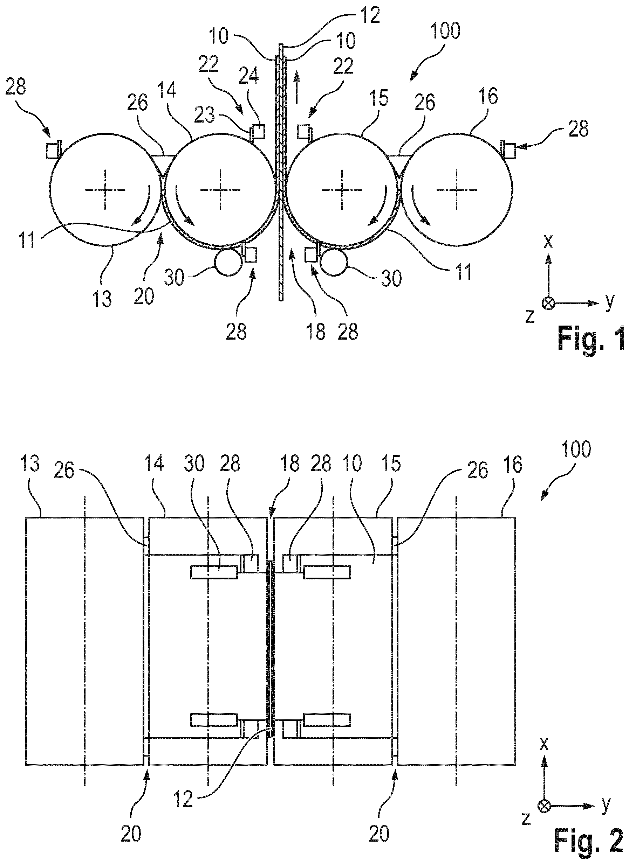

Fig. 1 zeigt schematisch eine Seitenansicht einer Walzenanlage 100 gemäß einem Ausführungsbeispiel. Eine solche Walzenanlage 100 kann zum Durchführen eines Verfahrens zur Herstellung von trockenen Elektroden 10 auf einem Stromsammler 12 verwendet werden. Die Walzenanlage 100 der Fig. 1 weist vier Walzen auf. Zwischen der ersten Walze 13 und der zweiten Walze 14 ist ein Spalt vorgesehen, welcher als Kalanderspalt 20 bezeichnet wird. Die erste Walze 13 kann als Auftragswalze bezeichnet werden. Der Spalt zwischen der dritten Walze 15 und der vierten Walze 16 wird ebenfalls als Kalanderspalt 20 bezeichnet. Eine solche Anpresswalzeneinheit kann eine oder mehr Walzen aufweisen. Zwischen der zweiten Walze 14 und der dritten Walze 15 ist auch ein Spalt vorgesehen, der hingegen als Laminierspalt 18 bezeichnet wird. Im Laminierspalt 18 ist einen Stromsammler 12 angeordnet. Die zweite Walze 14 und die dritte Walze 15 können Teil einer Anpresswalzeneinheit sein. Die zweite Walze 14 und die dritte Walze 15 können daher als Anpresswalze bezeichnet werden. Der Laminierspalt 18, welcher auch als Anpressspalt bezeichnet werden kann, kann dazu ausgeführt sein, das zu einer dünnen Schicht gewordene Pulver 11 von einer Walze der Anpresswalzeneinheit, d. h., von der zweiten Walze 14 und/oder von der dritten Walze 15 auf eine Seite und ggfs. auf zwei Seiten des Stromsammlers 12 mittels einer Anpresskraft zu übertragen. Der Vollständigkeit halber wird angemerkt, dass die Walzen zylindrisch ausgeführt sind und vorzugsweise in Bezug auf deren Axialachse parallel zueinander angeordnet sind.

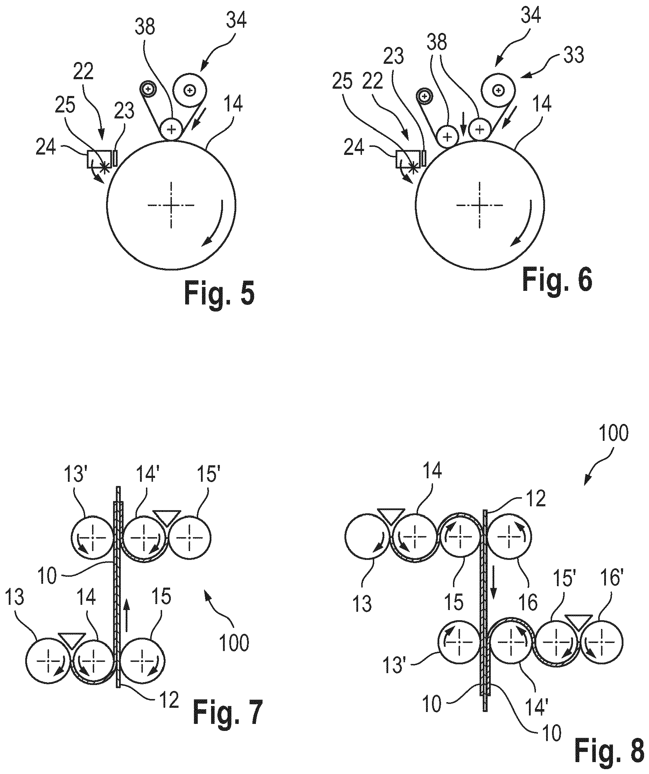

Die Walzenanlage 100 der Fig. 1 ist im Wesentlichen um den Stromsammler 12 symmetrisch ausgebildet. Das heißt, dass auf beiden Seite des Stromsammlers 12 das zur dünnen Schicht gewordene Pulver 11 aufgetragen werden kann. Es sei bemerkt, dass Elemente und/oder Komponenten, welche in Bezug auf einer Seite des Stromsammlers 12 der Walzenanlage 100 der Fig. 1 beschrieben werden, sich ebenfalls auf der anderen Seite des Stromsammlers 12 der Walzenanlage 100 der Fig. 1 spiegelsymmetrisch befinden können. Durch das Auftragen der dünnen Schicht auf beiden Seiten des Stromsammlers 12 kann der Wirkungsgrad der trockenen Elektrode 10 verbessert werden. Die hergestellte trockene Elektrode 10 setzt sich aus der dünnen Schicht und dem Stromsammler 12 zusammen. Es kann von einer einseitigen trockenen Elektrode 10 oder von einer zweiseitigen trockenen Elektrode 10 geredet werden, je nachdem ob der Stromsammler 12 auf beiden Seiten mit der dünnen Schicht aufgetragen wird. Unsymmetrische Ausführungsformen sind ebenfalls denkbar (siehe Fig. 7).

Auf einer ersten Seite des Stromsammlers 12, bzw. auf der linken Seite des Stromsammlers 12, sind bei der Walzenanlage 100 der Fig. 1 zwei Walzen angeordnet, die erste Walze 13 und die zweite Walze 14. Eine Schüttvorrichtung 26, welche dazu eingerichtet ist Pulver 11 zu schütten, kann zumindest teilweise in den zwei Kalanderspalten 20 der Walzenanlage 100 angeordnet sein. Die Schüttvorrichtung 26 kann als Dosiereinheit bezeichnet werden. Es können weiter Entfernvorrichtungen 22, auf jeweils einer der beiden Seiten des Stromsammlers 12, vorgesehen sein. Die zwei Walzen, die am nächsten zum Stromsammler 12 angeordnet sind, können mit einer solchen Entfernvorrichtung 22 vorgesehen sein. Die Entfernvorrichtung 22 kann einen Rakel 23 und eine Auffangvorrichtung 24 aufweisen.

Die erste Walze 13 und die zweite Walze 14 sind dazu eingerichtet, in entgegengesetzter Drehrichtung zu drehen. In den Kalanderspalt 20 zwischen der ersten Walze 13 und der zweiten Walze 14 kann mittels einer Schüttvorrichtung 26 Pulver 11 geschüttet werden. Das Pulver 11 wird dann an der zweiten Walze 14 geführt.

Die Walzenanlage 100 der Fig. 1 befindet sich im Betrieb, insbesondere im angelaufenen Betrieb. Dies kann aus der Fig. 1 entnommen werden, denn der Laminierspalt 18 ist derart eingestellt, dass das in den jeweiligen Kalanderspalten 20 geschüttete Pulver 11 zu einer dünnen Schicht wird und als dünne Schicht auf den Stromsammler 12 aufgetragen wird, um eine trockene Elektrode 10 zu bilden. D. h., der Laminierspalt 18 ist klein genug um zu erlauben, dass das zur dünnen Schicht gewordene Pulver 11 auf den Stromsammler 12 aufgetragen werden kann.

Fig. 2 zeigt schematisch eine Draufsicht einer Walzenanlage 100 gemäß einem Ausführungsbeispiel. Bei der Walzenanlage 100 der Fig. 2 kann es sich zum Beispiel um die Walzenanlage 100 der Fig. 1 handeln. Sofern nicht anders beschrieben, weist die Walzenanlage 100 der Figur 2 dieselben Elemente und Merkmale wie die Walzenanlage 100 der Figur 1 auf. Die zwei dünnen Schichten, die jeweils auf die zweite Walze 14 und auf die dritte Walze 15 geführt werden, werden dann auf den Stromsammler 12 aufgetragen. Um eine vorbestimmte Breite der trockenen Elektrode 10 einstellen zu können ist zumindest ein Randkantenschnitt 30, vorzugsweise zwei Randkantenschnitte 30 pro Walze, vorgesehen. Der Randkantenschnitt 30 kann die Kante oder den Rand der trockenen Elektrode 10 präzise definieren oder abschneiden. Mittels des Randkantenschnitts 30 kann die Breite der Elektrode(n) 10 eingestellt werden. Um das über den Rand hinaus übrig gebliebene Material, bzw. Pulver 11 oder zur Schicht gewordene Pulver 11, zu entfernen ist vorzugsweise direkt neben dem Randkantenschnitt 30 eine Entnahmeeinheit 28 angeordnet. Die Entnahmeeinheit 28 kann das Material entnehmen, bzw. auffangen. Die Entnahmeeinheit 28 kann einen Auffangbehälter aufweisen. Die Entnahmeeinheit 28 kann ferner einen Rakel 23 aufweisen, womit die entsprechende Walze gesäubert werden kann.

Das auf die zweite Walze 14 und auf die dritte Walze 15 geführte Pulver 11 bildet eine dünne Schicht. Sobald die dünne Schicht auf den Stromsammler 12 aufgetragen wird, kann die dünne Schicht als trockene Elektrode 10 bezeichnet werden. Um eine funktionsfähige trockene Elektrode 10 herstellen zu können muss die dünne Schicht möglichst homogen gebildet sein. Die dünne Schicht muss defektfrei oder makelfrei gebildet sein. Risse, Löcher und/oder Brüche in der Schicht können zum Beispiel als Defekt betrachtet werden. Vorzugsweise weist die dünne Schicht zudem eine vorgegebene minimale Schichtdicke auf. Die dünne Schicht, bzw. die trockene Elektrode 10, der Fig. 2 weist keinen Defekt auf. Daraus kann entnommen werden, dass die Walzenanlage 100 der Fig. 2 sich ebenfalls im Betrieb, insbesondere im angelaufenen Betrieb, befindet. Denn die erfindungsgemäße Walzenanlage 100 ist dazu eingerichtet, erst in einem angelaufenen Betrieb mittels des Stromsammlers 12 das zu einer dünnen Schicht gewordene Pulver 11 auffangen zu können.

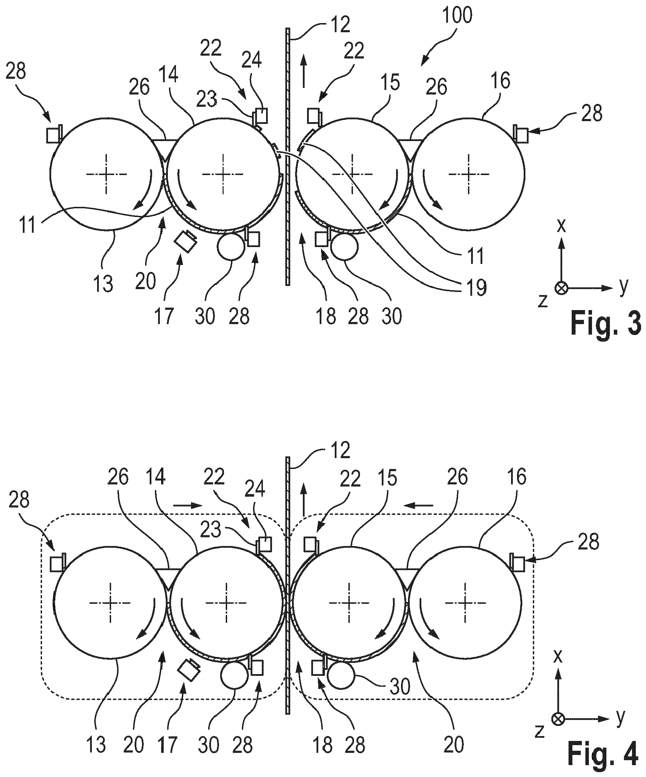

Fig. 3 zeigt schematisch eine Seitenansicht einer Walzenanlage 100 gemäß einem Ausführungsbeispiel. Sofern nicht anders beschrieben, weist die Walzenanlage 100 der Figur 3 dieselben Elemente und Merkmale wie die Walzenanlage 100 der Figuren 1 und 2 auf.

Im Gegensatz zu den Walzenanlagen 100 der Fig. 1 und 2 befindet sich die Walzenanlage 100 der Fig. 3 in einem anlaufenden Betrieb, d. h., noch nicht im angelaufenen Betrieb. Der Spalt, nämlich der Laminierspalt 18, zwischen der zweiten Walze 14 und der dritten Walze 15 ist größer im anlaufenden Betrieb als im angelaufenen Betrieb. Der Laminierspalt 18 der Walzenanlage 100 der Fig. 3 ist derart eingestellt, dass das Pulver 11 und/oder das teilweise zu einer dünnen Schicht gewordene Pulver 11 nicht an den Stromsammler 12 angebracht werden kann. Im anlaufenden Betrieb kann es sich daher als vorteilhaft erweisen, etwa um Energie zu sparen, den Stromsammler 12 nicht durch den Laminierspalt 18 zu bewegen.

An der zweiten Walze 14 und an der dritten Walze 15 der Walzenanlage 100 der Fig. 3 sind Brocken 19 oder Krümel von Pulver 11 dargestellt. Brocken 19 können eine defekte Schicht bilden. Das in den Kalanderspalt 20 geschüttete Pulver 11 ist im anlaufenden Betrieb noch nicht zu einer dünnen Schicht geworden. Vielmehr fängt die dünne Schicht erst an sich zu bilden, was in der Entstehung von Brocken 19 oder Krümeln von Pulver 11 resultiert. Das Pulver 11 ist im anlaufenden Zustand nur teilweise zu einer dünnen Schicht geworden. Mit anderen Worten ist die Qualität der dünnen Schicht noch nicht ausreichend, um daraus eine trockene Elektrode 10 zu machen. Deshalb ist es vorteilhaft, die Brocken 19 oder Krümel von Pulver 11 zu entfernen. Dies wird mittels einer Entfernvorrichtung 22 realisiert. Die Entfernvorrichtung 22 kann dazu ausgerichtet sein, das Pulver 11 an der zweiten und/oder an der dritten Walze 15 zu entfernen, vorzugsweise in Drehrichtung nach dem Laminierspalt 18. Zusätzlich kann es vorgesehen werden, dass die Entfernvorrichtung 22 beim Entfernen des Pulvers 11, bzw. der Brocken 19, die entsprechende Walze säubert oder reinigt. Hierfür kann die Entfernvorrichtung 22 einen Rakel 23 aufweisen. Um das Material, d. h., das Pulver 11 und/oder die Brocken 19, von der entsprechenden Walze zu entfernen weist die Entfernvorrichtung 22 vorzugsweise eine Auffangvorrichtung 24 auf. Die Auffangvorrichtung 24 kann aus mechanischer Weise das Material auffangen und/oder das Material absaugen.

Die Walzenanlage 100 der Fig. 3 weist ferner einen Schichtdickensensor 17 auf. Der Schichtdickensensor 17 ist vorzugsweise in Drehrichtung vor dem Laminierspalt 18 angeordnet. Es ist zudem denkbar, dass ein weiterer Schichtdickensensor 17 an der dritten Walze 15 der Walzenanlage 100 der Fig. 3 angeordnet ist. Denn an der dritten Walze 15 wird ebenfalls das zur dünnen Schicht gewordene Pulver 11 geführt.

Mittels des Schichtdickensensors 17 kann die Dicke des zumindest teilweise zur dünnen Schicht gewordenen Pulvers 11 ermittelt, bzw. gemessen werden. Wenn die Dicke des Pulvers 11 und/oder des zumindest teilweise zur dünnen Schicht gewordenen Pulvers 11 ermittelt wird, kann entschieden werden, bzw. eine Kontrolleinheit entscheiden, ob die ermittelte Dicke ein vorgegebenes Kriterium erfüllt. Erfüllt die ermittelte Dicke das vorgegebene Kriterium, so kann die Kontrolleinheit ein Signal zum Einstellen des Laminierspaltes 18 auslösen. Beim Einstellen des Laminierspaltes 18 kann die dritte Walze 15, insbesondere zusammen mit der vierten Walze 16, und/oder die erste Walze 13 und die zweite Walze 14 hin zum Stromsammler 12 aufeinander bewegt werden.

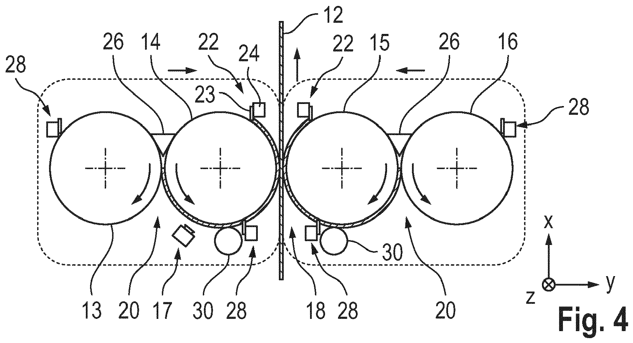

Fig. 4 zeigt schematisch eine Seitenansicht einer Walzenanlage 100 gemäß einem Ausführungsbeispiel. Sofern nicht anders beschrieben, weist die Walzenanlage 100 der Figur 4 dieselben Elemente und Merkmale wie die Walzenanlagen 100 der Figuren 1 bis 3 auf.

In Fig. 4 ist es ersichtlich, dass auf dem Stromsammler 12 keine trockene Elektrode 10, bzw. keine dünne Schicht aufgebracht worden ist. Daran kann somit erkannt werden, dass die Walzenanlage 100 der Fig. 4 sich noch im anlaufenden Betrieb befindet. Allerdings, im Gegensatz zu Fig. 3, bildet das an der zweiten Walze 14 und an der dritten Walze 15 geführte Pulver 11 eine homogene dünne Schicht. Mit anderen Worten wurde die Walzenanlage 100 lang genug im anlaufenden Betrieb betrieben und ist somit bereit, in den angelaufenen Betrieb überzugehen. Die Kontrolleinheit der Walzenanlage 100 (hier nicht dargestellt) kann daher ein Signal auslösen, um den Laminierspalt 18 derart einzustellen, dass das zur dünnen Schicht gewordene Pulver 11 nun auf den Stromsammler 12 aufgebracht werden kann. Um den Laminierspalt 18 einzustellen, können die Walzen paarweise, d. h., die erste und die zweite Walze 14 zusammen und/oder die dritte und die vierte Walze 16 zusammen, in radialer Richtung hin zum Stromsammler 12 bewegt werden. Eine paarweise Bewegung der Walzen ermöglicht es, den jeweiligen Kalanderspalt 20 konstant zu halten. Bei einer nichtsymmetrischen Ausführungsform der Walzenanlage 100 ist es denkbar, dass beispielsweise nur die zwei Walzen auf einer Seite des Stromsammlers 12 hin zum Stromsammler 12 bewegt werden. Die entsprechenden Walzen werden radial hin zum Stromsammler 12 bewegt, bis das zur dünnen Schicht gewordene Pulver 11 auf den Stromsammler 12 aufgebracht werden kann. Die radiale Bewegung, bzw. radialen Bewegungen sind mittels Pfeilen in Fig. 4 dargestellt.

Fig. 5 und 6 zeigen schematisch eine Walze einer Walzenanlage 100 gemäß einem Ausführungsbeispiel. Bei den in Fig. 5 und 6 gezeigten Walzen kann es sich um die dritte Walze 15 handeln. Werden die Walzen der Fig. 5 und 6 spiegelverkehrt betrachtet, so kann es sich auch um die zweite Walze 14 einer Walzenanlage 100 handeln.

Wie mit Bezug auf Fig. 1 bis 4 beschrieben, kann an der zweiten Walze 14 und alternativ auch an der dritten Walze 15, eine Entfernvorrichtung 22 angeordnet sein. Die Entfernvorrichtung 22 kann einerseits zur Entfernung des Materials an der entsprechenden Walze und anderseits zur Säuberung der entsprechenden Walze dienen. Zur Säuberung der entsprechenden Walze kann die Entfernvorrichtung 22 eine Bürste 25 aufweisen. Bei der Bürste 25 kann es sich um eine Drehbürste handeln. In Drehrichtung der Walze nach der Entfernvorrichtung 22 kann weiter eine Reinigungsvorrichtung 34 vorgesehen werden. Die Reinigungsvorrichtung 34 kann die Oberfläche der Walze zusätzlich zur Entfernvorrichtung 22 reinigen. Die Reinigungsvorrichtung 34 kann eine oder mehrere Reinigungswalzen 38 aufweisen, die dazu eingerichtet sind, ein Faserstoff oder ein Vliesstoff an die Oberfläche der entsprechenden Walze aufzubringen oder auf die Walzen zu drücken. Dadurch kann eine höhere Reinigungswirkung erzielt werden. Der Faserstoff kann von einer Spule 33 zu einer anderen Spule 33 über die Reinigungswalze 38 abgewickelt und anschließend wieder aufgewickelt werden. In der Ausführungsform der Fig. 6 kann es weiter vorgesehen werden, dass Reinigungsmittel auf den Faserstoff und/oder auf die Oberfläche der entsprechenden Walze aufgebracht wird. Bei der Ausführungsform der Fig. 5 kann die Säuberung der Walze trocken ausgeführt werden.

Fig. 7 bis 9 zeigen schematische Seitenansichten von Walzenanlagen 100 gemäß weiteren Ausführungsbeispielen. Sofern nicht anders beschrieben, weist die Walzenanlage 100 der Figur 7 bis 9 dieselben Elemente und Merkmale wie die Walzenanlagen 100 der Figuren 1 bis 4 auf.

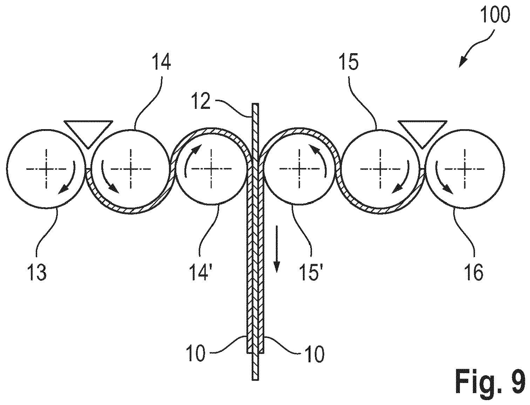

Grundsätzlich kann jede Konfiguration von Walzen denkbar sein, welche es ermöglicht, auf eine oder auf beide Seiten des Stromsammlers 12 eine dünne Schicht aufzutragen. Es ist zudem denkbar, eine trockene Elektrode 10 herzustellen, welche nur einseitig ist. In diesem Fall kann die Walzenanlage 100 lediglich drei Walzen aufweisen. So könnten zum Beispiel nur die unteren drei Walzen der Walzenanlage 100 der Fig. 7 vorgesehen werden. In Fig. 9 können zudem vier Walzen zum Übertragen der dünnen Schicht auf den Stromsammler 12 vorgesehen werden. Mit anderen Worten ist es denkbar, dass eine Anpresswalzeneinheit aufweisend vier Anpresswalzen vorgesehen ist. Das Pulver 11, welches eben angepresst wird, wird im Beispielsfall der Fig. 9 daher an zwei zweiten Walzen 14, 14' geführt und ebenfalls an zwei dritten Walzen 15, 15' geführt.

Ergänzend sei darauf hingewiesen, dass die Begriffe "umfassend" und "aufweisend" keine anderen Elemente ausschließen und die unbestimmten Artikel "eine" oder "ein" keine Vielzahl ausschließen. Ferner sei darauf hingewiesen, dass Merkmale und Schritte, die mit Verweis auf eines der obigen Ausführungsbeispiele beschrieben worden sind, auch in Kombination mit anderen Merkmalen und Schritten anderer oben beschriebener Ausführungsbeispiele verwendet werden können. Bezugszeichen in den Ansprüchen sind nicht als Einschränkungen anzusehen.

### Bezugszeichenliste

- 10: Elektrode
- 11: Pulver
- 12: Stromsammler
- 13: erste Walze
- 14: zweite Walze
- 15: dritte Walze
- 16: vierte Walze
- 17: Schichtdickensensor
- 18: Laminierspalt
- 19: Brocken
- 20: Kalanderspalt
- 22: Entfernvorrichtung
- 23: Rakel
- 24: Auffangvorrichtung
- 25: Bürste
- 26: Schüttvorrichtung
- 28: Entnahmeeinheit
- 30: Randkantenbeschnitt
- 33: Spule
- 34: Reinigungsvorrichtung
- 38: Reinigungswalze
- 100: Walzenanlage

## Patentansprüche

1. Verfahren zur Herstellung von trockenen Elektroden (10) auf einem Stromsammler (12) mittels einer Walzenanlage (100), wobei die Walzenanlage (100) zumindest drei Walzen (13, 14, 15) und den zwischen einer zweiten Walze (14) der zumindest drei Walzen und einer dritten Walze (15) der zumindest drei Walzen angeordneten Stromsammler (12) aufweist und wobei das Verfahren folgende Schritte aufweist:
• Rotieren einer ersten Walze (13) der zumindest drei Walzen und der zweiten Walze (14) in entgegengesetzter Drehrichtung,
• Schütten von Pulver (11) in einen durch die erste rotierende Walze (13) und zweite rotierende Walze (14) gebildeten Kalanderspalt (20), wobei das Pulver (11) an der zweiten Walze (14) geführt wird,
• Auslösen eines Signals mittels einer Kontrolleinheit zum Einstellen eines Laminierspaltes (18) zwischen der zweiten Walze (14) und der dritten Walze (15), wobei die dritte Walze (15) und/oder die erste Walze (13) und die zweite Walze (14) hin zum Stromsammler (12) aufeinander bewegt werden,
• Rotieren zumindest der dritten Walze (15) der zumindest drei Walzen in entgegengesetzter Richtung zur zweiten Walze (14), und
• Bewegen des Stromsammlers (12) durch den Laminierspalt (18), wobei der Laminierspalt (18) derart eingestellt wird, dass das Pulver (11) als dünne Schicht auf den Stromsammler (12) zur Ausbildung der trockenen Elektroden (10) aufgebracht wird.

2. Verfahren nach Anspruch 1,
**dadurch gekennzeichnet,**
**dass** das Verfahren weiter zumindest einen der folgenden Schritte aufweist:
• Ermitteln der Dicke des zu einer dünnen Schicht gewordenen Pulvers (11) an der zweiten Walze (14), und
• Auslösen des Signals mittels der Kontrolleinheit basierend auf der ermittelten Dicke.

3. Verfahren nach Anspruch 1 oder 2,
**dadurch gekennzeichnet,**
**dass** das Verfahren weiter folgenden Schritt aufweist:
• Entfernen des an der zweiten Walze (14) geführten Pulvers (11), insbesondere des zu einer defekten dünnen Schicht gewordenen Pulvers (11), durch eine Entfernvorrichtung (22), die in Drehrichtung nach dem Laminierspalt (18) angeordnet ist.

4. Verfahren nach einem der voranstehenden Ansprüche,
**dadurch gekennzeichnet,**
**dass** die Drehgeschwindigkeit der ersten Walze (13), der zweiten Walze (14), der dritten Walze (15) und/oder der Durchlaufgeschwindigkeit des Stromsammlers (12) mittels der Kontrolleinheit gesteuert wird, vorzugsweise basierend auf der ermittelten Dicke des zu einer dünnen Schicht gewordenen Pulvers (11), gesteuert wird.

5. Verfahren nach einem der voranstehenden Ansprüche,
**dadurch gekennzeichnet,**
**dass** beim Entfernen des an der zweiten Walze (14) geführten Pulvers (11), insbesondere des zu einer defekten dünnen Schicht gewordenen Pulvers (11), das Pulver (11) von der Entfernvorrichtung (22) aufgefangen und/oder abgesaugt wird.

6. Verfahren nach einem der voranstehenden Ansprüche,
**dadurch gekennzeichnet,**
**dass** das Signal zum Einstellen eines Laminierspaltes (18) zwischen der zweiten Walze (14) und der dritten Walze (15) nach einer vordefinierten Zeit ausgelöst wird.

7. Verfahren nach einem der voranstehenden Ansprüche,
**dadurch gekennzeichnet,**
**dass** das Verfahren weiter zumindest einen der folgenden Schritte aufweist:
• Ermitteln einer Pulvermenge, die in den Kalanderspalt (20) geschüttet worden ist,
• Ermitteln einer erfolgten Drehung der zweiten Walze (14),
• Auslösen des Signals mittels der Kontrolleinheit basierend auf der ermittelten Pulvermenge und/oder der ermittelten erfolgten Drehung der zweiten Walze (14).

8. Walzenanlage (100) zur Herstellung von trockenen Elektroden (10) auf einem Stromsammler (12), aufweisend
eine Kontrolleinheit,
zumindest drei Walzen,
einen in einem Laminierspalt (18) angeordneten Stromsammler (12), welcher dazu ausgebildet ist als dünne Schicht gewordenes Pulver (11) aufzufangen, wobei der Laminierspalt (18) den Abstand zwischen einer ersten Walze (13) der zumindest drei Walzen und einer zweiten Walze (14) der zumindest drei Walzen definiert,
eine Schüttvorrichtung (26), welche dazu ausgebildet ist, Pulver (11) in den Kalanderspalt (20) zu schütten, wobei der Kalanderspalt (20) den Abstand zwischen einer ersten Walze (13) und der zweiten Walze (14) definiert, und
eine Entfernvorrichtung (22), welche dazu eingerichtet ist das an der zweiten Walze (14) geführte Pulver (11) zu entfernen, wobei die Entfernvorrichtung (22) in Drehrichtung nach dem Laminierspalt (18) angeordnet ist,
wobei die Kontrolleinheit zum Auslösen eines Signals zum Einstellen eines Laminierspaltes (18), insbesondere die Dicke des Laminierspaltes (18), eingerichtet ist.

9. Walzenanlage (100) nach Anspruch 8,
weiter aufweisend einen Schichtdickensensor (17), welcher dazu eingerichtet ist, die Dicke des zu einer dünnen Schicht gewordenen Pulvers (11) an der zweiten Walze (14), insbesondere in Drehrichtung vor dem Laminierspalt (18), zu ermitteln.

10. Trockene Elektrode (10), welche mittels eines Verfahrens nach einem der Ansprüche 1 bis 7 hergestellt ist.

11. Computerprogrammprodukt, umfassend Befehle, das bei einer Ausführung die Kontrolleinheit der Walzenanlage (100) nach einem der Ansprüche 8 und 9, veranlasst, zumindest Teilschritte des Verfahrens nach einem der Ansprüche 1 bis 7 auszuführen.

12. Computerlesbares Medium, auf dem das Computerprogrammprodukt nach Anspruch 11 gespeichert ist.
